Europäisches Patentamt

European Patent Office

Office européen des brevets

(19)

(11) **EP 1 107 037 A2**

(12) **EUROPÄISCHE PATENTANMELDUNG**

(43) Veröffentlichungstag:
   **13.06.2001 Patentblatt 2001/24**

(51) Int Cl.⁷: **G02B 21/00**

(21) Anmeldenummer: **00125470.5**

(22) Anmeldetag: **21.11.2000**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **24.11.1999 DE 19956438**

(71) Anmelder: **Leica Microsystems Heidelberg GmbH 68165 Mannheim (DE)**

(72) Erfinder: **Engelhardt, Johann, Dr. 76669 Bad Schönborn (DE)**

(74) Vertreter: **Naumann, Ulrich, Dr.-Ing. Patentanwälte, Ullrich & Naumann, Luisenstrasse 14 69115 Heidelberg (DE)**

(54) **Anordnung zum Scannen einer Objektaufnahmeeinrichtung**

(57)   Die Erfindung betrifft eine Anordnung zum Scannen einer Objektaufnahmeeinrichtung (1) zur Datenaufnahme mit einem Laserscan-Mikroskop, vorzugsweise mit einem konfokalen Laserscan-Mikroskop (2), mit der die Bildaufnahme großer Objektfelder mit hinreichender Geschwindigkeit durch das Scannen der Objektaufnahmeeinrichtung (1) möglich ist, ist dadurch gekennzeichnet, dass die Objektaufnahmeeinrichtung (1) von einer Dreheinrichtung (3) um eine erste Achse (4) alternierend drehbar ist.

Fig. 2

EP 1 107 037 A2

**Beschreibung**

Die vorliegende Erfindung betrifft eine Anordnung zum Scannen einer Objektaufnahmeeinrichtung zur Datenaufnahme mit einem Laserscan-Mikroskop, vorzugsweise mit einem konfokalen Laserscan-Mmikroskop.

Bei Laserscan-Mikroskopen wird Anregungslicht eines Lasers auf ein Objekt fokussiert und die Intensität des Detektionslichts aus dieser Fokusposition mit einem Detektor detektiert. Um ein zwei- bzw. dreidimensionales Bild des Objekts zu erhalten, wird entweder der fokussierte Laserstrahl über das Objekt gerastert (Beam-Scanning) oder das Objekt durch die Fokusposition bewegt (Objekt-Scanning). Beam-Scanning wird üblicherweise mit einem im Strahlengang eines Laserscan-Mikroskops beweglich angeordneten Scanspiegel realisiert, was eine relativ schnelle Datenaufnahme ermöglicht. Hierbei ist das maximal aufnehmbare Objektfeld, das durch die verwendete Mikroskopoptik vorgegeben ist, für einige Anwendungen jedoch zu klein. Keine Begrenzung hinsichtlich des Objektfeldes liegt beim Objekt-Scanning vor, bei dem ein Objektträger meanderförmig durch die Fokusposition bewegt wird, was im Allgemeinen mit mechanisch aufwendigen XY-Verstelltischen realisiert wird. Hierbei sind jedoch große Massen zu beschleunigen, wodurch die Datenaufnahme zeitintensiv und im Hinblick auf die Steuer- und Regelungstechnik mit hohem Aufwand verbunden ist. Die Datenaufnahme ist beim Objekt-Scanning erheblich langsamer, was für Routineanwendungen inakzeptabel ist.

Der vorliegenden Erfindung liegt daher die Aufgabe zugrunde, ein Laserscan-Mikroskop, vorzugsweise ein konfokales Laserscan-Mikroskop, anzugeben, mit dem Bildaufnahmen großer Objektfelder mit hinreichender Geschwindigkeit durchgeführt werden können, was insbesondere auch unter Verwendung von einfacher Mikroskopoptik möglich sein soll.

Die voranstehende Aufgabe wird durch die Merkmale des Patentanspruches 1 gelöst. Danach ist eine Anordnung zum Scannen einer Objektaufnahmeeinrichtung zur Datenaufnahme mit einem Laserscan-Mikroskops, vorzugsweise mit einem konfokalen Laserscan-Mikroskops dadurch gekennzeichnet, dass die Objektaufnahmeeinrichtung von einer Dreheinrichtung um eine erste Achse alternierend drehbar ist.

Erfindungsgemäß ist zunächst erkannt worden, dass die Bildaufnahme großer Objektfelder insbesondere unter Verwendung einfacher Mikroskopoptik mit Objekt-Scanning realisierbar ist, wenn die bislang erzielbare Aufnahmegeschwindigkeit erhöht werden kann. In erfindungsgemäßer Weise wird hierzu die Objektaufnahmeeinrichtung nicht in linearer Richtung durch den Fokus bewegt, sondern von einer Dreheinrichtung um eine erste Achse alternierend gedreht.

Unter alternierend drehbar ist in diesem Zusammenhang zu verstehen, daß die Objektaufnahmeeinrichtung zunächst um eine Drehachse im Uhrzeigersinn und danach um die gleiche Drehachse entgegengesetzt dem Uhrzeigersinn gedreht wird. Mit anderen Worten setzt sich die resultierende Drehbewegung aus wiederkehrenden, im Drehsinn entgegengesetzten Einzeldrehungen zusammen. Die Drehung der Objektaufnahmeeinrichtung wird hierbei von einer geeigneten Dreheinrichtung durchgeführt. Mit einer derartigen Drehung wird eine wiederkehrende Datenaufnahme eines entsprechenden "eindimensionalen" Kreissegments des Objekts detektiert.

Eine über ein Kreissegment hinausgehende Datenaufnahme wird in einer vorteilhaften Ausführungsform dadurch möglich, dass die Objektaufnahmeeinrichtung zusammen mit der Dreheinrichtung um eine zweite Achse gedreht wird. Hierdurch ist eine zwei- oder dreidimensionale Datenaufnahme des Objekts möglich. In konstruktiver Hinsicht könnte die Objektaufnahmeeinrichtung zusammen mit der Dreheinrichtung der ersten Achse an einer um die zweite Achse drehbar gelagerten Halterung befestigt sein. Falls die erste Drehachse zumindest nahezu parallel zur zweiten Drehachse angeordnet ist, kann somit eine Scanbewegung des Objekts erzielt werden, die in einer Ebene liegt.

In vorteilhafter Weise sind die beiden Drehachsen relativ zur optischen Achse des Laserscan-Mikoskops derart angeordnet, dass die resultierenden Scan-Trajektorien beider Achsen nahezu orthogonal zueinander verlaufen. Unter Scan-Trajektorien ist in diesem Zusammenhang das von dem Laserscan-Mikroskop auf das Objekt projizierte Linienmuster zu verstehen, das sich aufgrund der Scanbewegung der Objektaufnahmeeinrichtung ergibt. Es stellt das Koordinatensystem der Bilddaten nach einer Digitalisierung dar. Wenn nun die beiden Drehachsen derart angeordnet sind, dass deren Scan-Trajektorien jeweils nahezu orthogonal zueinander verlaufen, ist eine optische Abtastung des Objekts mit einer nahezu gleichmäßigen räumlichen Abtastrate bzw. Auflösung und somit Informationsdichte gegeben. Dies ist vor allem für eine nachfolgende Weiterverarbeitung der aufgenommenen Bilddaten wichtig, da diese nach einer Datenaufnahme in einem krummlinigen Koordinatensystem vorliegen und bspw. nach einer Koordinatentransformation in ein rechtwinkliges Koordinatensystem ebenfalls eine weitgehend gleichmäßige Informationsdichte aufweisen.

In vorteilhafter Weise ist es möglich, die Objektaufnahmeeinrichtung gemeinsam mit der Dreheinrichtung translatorisch zu bewegen, um hierdurch eine zwei- oder dreidimensionale Datenaufnahme bzw. Abrasterung eines Objekts zu erzeugen.

In einer konkreten Ausführungsform liegt die resultierende Scanbewegung der Objektaufnahmeeinrichtung in einer Ebene. Somit können zweidimensionale Bereiche dreidimensionaler Objekte aufgenommen bzw. abgerastert werden.

In einer weiteren Ausführungsform verläuft die Scanbewegung der Objektaufnahmeeinrichtung zumindest nahezu parallel zu der Oberfläche der Objektaufnahmeeinrichtung. Falls sich das zu detektierende Objekt unmittelbar unter der Oberfläche der Objektaufnahmeeinrichtung befindet, kann durch diese Maßnahme das Objekt durch Abrasterung einer einzigen Ebene komplett aufgenommen werden, vorausgesetzt, dass die Objektdicke und der Tiefenschärfenbereich der Mikroskopoptik in der gleichen Größenordnung liegt.

Wenn die Objektaufnahmeeinrichtung gemeinsam mit der Dreheinrichtung translatorisch bewegt wird, ist in einer alternativen Ausführungsform vorgesehen, dass die Translationsbewegung zumindest nahezu parallel zu der Oberfläche der Objektaufnahmeeinrichtung verläuft. Hierdurch kann ebenfalls eine Scanbewegung erzeugt werden, die dann in einer Ebene liegt und parallel zu der Oberfläche der Objektaufnahmeeinrichtung verläuft. Auch hierdurch wäre in vorteilhafter Weise eine komplette Datenaufnahme eines direkt unter der Oberfläche der Objektaufnahmeeinrichtung befindlichen Objekts möglich.

Falls dreidimensionale Objekte aufzunehmen sind, deren Ausdehnung entlang der optischen Achse größer als der Tiefenschärfenbereich der Mikroskopoptik ist, ist eine Translationsbewegung der Objektaufnahmeeinrichtung entlang der optischen Achse vorgesehen. Letztendlich kann so durch die Kombination von Dreh- bzw. Translationsbewegungen ein dreidimensional ausgedehntes Objekt mit Hilfe von Objekt-Scanning komplett aufgenommen werden.

In einer konkreten Ausführungsform verläuft die Translationsbewegung entlang einer linearen Richtung. Insbesondere könnte die Translationsbewegung senkrecht zu ersten Drehachse verlaufen. Im Konkreten verläuft die Translationsbewegung periodisch in entgegengesetzte Richtungen, es liegt also ein wiederkehrendes Hin- und Herlaufen der Objektaufnahmeeinrichtung zusammen mit der Dreheinrichtung vor. Diese könnte beispielsweise durch einen Linearverschiebetisch mit entsprechenden Führungsmitteln realisiert werden.

In besonders vorteilhafter Weise ist die Objektaufnahmeeinrichtung zur optischen Achse des Laserscan-Mikroskops derart angeordnet, dass die Normale der Oberfläche der Objektaufnahmeeinrichtung einen Winkel zur optischen Achse des Laserscan-Mikroskops aufweist, der von 0 Grad verschieden ist. Der Haupt-Rückreflex des Anregungslichts, der beispielsweise an dem optischen Übergang zur Objektaufnahmeeinrichtung auftritt, kann so in vorteilhafter Weise aus dem Anregungs- bzw. Detektionsstrahlengang des Laserscan-Mikroskops unterdrückt bzw. ausgeblendet werden. Dies ist insbesondere deshalb von Bedeutung, da nun ein (Bandpass)-Sperrfilter geringerer Stärke eingesetzt werden kann, der das zu detektierende Fluoreszenzlicht nur unwesentlich herabsetzt. Die Ausblendung des Haupt-Rückreflexes ist insbesondere bei der Verwendung von Lasern vorteilhaft, denn das zum Laser zurücklaufende Anregungslicht stört im Allgemeinen dessen stimulierte Emission, was zu unerwünschten Intensitätsschwankungen des Laserlichts führen kann. Weiterhin können Reflexionen an Objektträgerkanten vermieden werden, die zu störenden Interferenzen im Objektbereich und damit ebenfalls zu Artefakten bei der Bildaufnahme führen können.

Der auf diese Weise ausgeblendete Reflexionsanteil des Anregungslichts gelangt daher nicht zu dem Detektor, wodurch eine Erhöhung des Dynamikbereichs des Detektionssignals ermöglicht wird. Somit können entsprechende Sperrfilter, die vor dem Detektor angeordnet sind um gestreute bzw. reflektierte Anteile des Anregungslichts aus dem Detektionsstrahlengang herauszufiltern, in vorteilhafter Weise derart ausgewählt werden, dass das Detektionslicht durch diese dem Detektor vorgeordneten Filter weniger abgeschwächt wird. In vorteilhafter Weise ist der Winkel zwischen der Normale der Oberfläche der Objektaufnahmeeinrichtung und der optischen Achse des Laserscan-Mikroskops größer als 0 und kleiner als 10 Grad.

Die Objektaufnahmeeinrichtung weist einen Objektträger und eine Objektträgereinheit auf. Der Objektträger nimmt das zu detektierende Objekt in sich auf. Es kann sich hierbei beispielsweise um einen herkömmlichen Objektträger aus Glas handeln. Das Objekt auf dem Objektträger aus Glas könnte mit einem Deckglas abgedeckt sein. Ganz allgemein kann der Objektträger eine Glasplatte aufweisen, an der die aufzunehmenden Objekte angeordnet bzw. angewachsen sind. Diese Glasplatte ist dann in einer entsprechenden Kammereinheit integriert.

Die Objektaufnahmeeinrichtung könnte automatisch mit Objektträgern bestückbar sein, so dass im automatisierten Laboreinsatz ein hoher Durchsatz zu vermessender Objektträger möglich ist.

Die Objektträgereinheit sowie der Objektträger ist aus Material geringer Dichte/Masse gefertigt, vorzugsweise aus Plastik oder Aluminium. Eine Leichtbauweise dieser Bauteile ermöglicht eine hohe Scanfrequenz der Dreheinrichtung, wodurch die Dauer der Datenaufnahme in vorteilhafter Weise verkürzt werden kann.

Die zu scannende Objektaufnahmeeinrichtung ist derart ausgestaltet, dass ihr Schwerpunkt auf der ersten oder zweiten Drehachse liegt. Bei einer derartigen konstruktiven Ausgestaltung treten während dem Scannen keine zusätzlichen Drehmomente auf, so dass hierdurch vor allem eine Minimierung der durch den Scanvorgang hervorgerufenen Vibrationen der Objektaufnahmeeinrichtung erreicht werden kann.

Im Hinblick auf eine automatische Bestückung der Objektaufnahmeeinrichtung mit Objektträger könnte der Objektträger mit mindestens einer Klemmvorrichtung an der Objektträgereinheit befestigt werden. Als Klemmvorrichtung könnte beispielsweise eine herkömmliche Klemmfeder aus Metall eingesetzt werden, die den Objektträger auf eine Unterlage der Objektträgereinheit drückt.

Ebenso könnte der Objektträger mit Hilfe einer Unterdruck- bzw. Vakuumeinrichtung an der Objektträgereinheit befestigt werden. Die Unterdruck- bzw. Vakuumeinrichtung könnte beispielsweise am Laserscan-Mikroskop otrsfest angeordnet und über einen flexiblen Schlauch mit der Objektträgereinheit verbunden sein, um den Objektträger mit Unterdruck zu beaufschlagen.

Weiterhin wäre es denkbar, dass der Objektträger aufgrund magnetischer oder elektromagnetischer Wechselwirkung an der Objektträgereinheit befestigbar ist. Hierzu könnte beispielsweise ein Teil des Objektträgers aus ferromagnetischem Material bestehen, der an einer metallischen oder ebenfalls ferromagnetischen Objektträgereinheit befestigbar ist. Ebenfalls ist es denkbar, dass die Objektträgereinheit elektromagnetisch ausgestaltet ist, so dass ein zumindest teilweise aus Metall bestehender Objektträger mit Hilfe elektromagnetischer Wechselwirkung an der Objektträgereinheit befestigbar ist.

In vorteilhafter Weise wird als Dreheinrichtung der Objektaufnahmeeinrichtung ein Galvanometer verwendet. Dies ist insbesondere deshalb vorteilhaft, da Galvanometer verglichen zu Linearverschiebetischen preiswert, einfach ansteuerbar und hinsichtlich ihrer Spezifikationen in einer großen Vielfalt kommerziell erhältlich sind. Dementsprechend kann das die Objektaufnahmeeinrichtung drehende Galvanometer derart ausgewählt und dimensioniert werden, dass eine möglichst hohe Schwingfrequenz bei minimalen Vibrationserscheinungen des Objektscansystems erzielbar ist. Hierbei sollte eine Abweichung von Soll- zu Ist-Position des Galvanometers sowie eine Abweichung der Scangeschwindigkeit minimal sein. Das Galvanometer wird mit einer Frequenz betrieben, die in einem Bereich von 10 bis 1000 Herz liegt. Wenn die Dreheinrichtung mit einer konstanten Scanfrequenz betrieben werden soll, könnte ein resonantes Galvanometer verwendet werden. Dies hätte den Vorteil, dass die durch das resonante Galvanometer erzeugte Schwingung der Objektaufnahmeeinrichtung praktisch genau der Soll-Frequenz des resonanten Galvanometers entspricht.

Als weitere Dreheinrichtung für die zweite Achse könnte ebenfalls ein Galvanometer vorgesehen sein. Dieses Galvanometer ist derart dimensioniert, dass es die Objektaufnahmeeinrichtung samt Dreheinrichtung der ersten Achse dreht. Dementsprechend wird dieses Galvanometer mit einer geringeren Scanfrequenz betrieben. Idealerweise ist die konstruktive Anordnung der von diesem weiteren Galvanometer zu drehenden Baugruppen derart gewählt, dass zur Vermeidung von zusätzlichen Drehmomenten deren Schwerpunkt auf der Achse des weiteren Galvanometers liegt.

In einer weiteren Ausführungsform ist als Dreheinrichtung für die zweite Achse eine Hebeleinrichtung vorgesehen. Die Hebeleinrichtung weist einen Elektromotor, eine Gewindespindel, ein Umlaufgewindestück und ein Verbindungselement auf. Die Gewindespindel ist der Achse des Elektromotors zugeordnet und ein auf der Gewindespindel befindliches Umlaufgewindestück ist durch Drehen der Gewindespindel entlang der Richtung der Achse der Gewindespindel positionierbar; für das Umlaufgewindestück ist keine Eigendrehung vorgesehen. Das Umlaufgewindestück ist über ein Verbindungselement mit der Dreheinrichtung verbunden, das Verbindungsstück könnte beispielsweise als Blattfeder ausgeführt sein. In vorteilhafter Weise erfolgt die Drehmoment-Übertragung der Linearbewegungen des Umlaufgewindestücks auf die Dreheinrichtung mit Hilfe der Blattfeder spielfrei, wodurch eine wohldefinierte und vor allem reproduzierbare Drehbewegung durchgeführt werden kann.

Bei ortsfester Anordnung des Elektromotors wird durch das Drehen der Achse bzw. der Gewindespindel das Umlaufgewindestück in Richtung der Achse der Gewindespindel bewegt, wodurch bezogen zur zweiten Drehachse der Objektaufnahmeeinrichtung über das Verbindungselement ein Drehmoment auf die Objektaufnahmeeinrichtung übertragen wird, so dass diese hierdurch um die zweite Achse gedreht wird. In vorteilhafter Weise ist der Elektromotor derart befestigt, dass er um eine Achse federnd schwenkbar gelagert ist. Diese Achse könnte senkrecht zur Drehachse des Elektromotors angeordnet sein. Eine eventuell geringfügige Unwucht der Achse des Elektromotors oder eine geringe mechanische Störung des Objektscansystems kann durch die federnde Lagerung des Elektromotors kompensiert werden, so dass diese Störungen nicht auf die Dreheinrichtung, beispielsweise in Form von unerwünschten Bewegungen, übertragen werden.

In vorteilhafter Weise ist die Anordnung zum Scannen der Objektaufnahmeeinrichtung vibratorisch vom Laserscan-Mikroskop entkoppelt. Hierdurch wird vor allem eine Dejustage einzelner optischer Komponenten des Laserscan-Mikroskops, die aufgrund der Vibrationen der Dreheinrichtung hervorgerufen werden könnte, vermieden.

Die Datenaufnahme von Objekten könnte bezüglich der schnellen Drehachse unidirektional erfolgen. So würde bei einer alternierenden Drehung der Objektaufnahmeeinrichtung eine Datenaufnahme immer nur dann erfolgen, wenn die Objektaufnahmeeinrichtung beispielsweise in Richtung des Uhrzeigersinns dreht, nicht jedoch wenn die Objektaufnahmeeinrichtung entgegengesetzt dem Uhrzeigersinn dreht.

Ebenso könnte die Datenaufnahme bezüglich der schnellen Drehachse bidirektional erfolgen. So werden Bilddaten sowohl bei der Drehung im Uhrzeigersinn als auch entgegengesetzt dem Uhrzeigersinn aufgenommen. Eine Datenaufnahme an den Stellen der Umkehrpunkte ist hierbei nicht vorgesehen, d.h. der gewählte Drehbereich der Objektaufnahmeeinrichtung muss größer als der aufzunehmende Objektbereich sein.

Die mit Hilfe der Dreheinrichtung aufgenommenen Bilddaten liegen nach der Digitalisierung mit einer Digitalisierungseinrichtung im Steuerrechner des Laserscan-Mikroskops im krummlinigen Koordinatensystem vor. Diese Bilddaten werden mit einem Computerprogrammmodul in ein rechtwinkliges Koordinatensystem transformiert. Wenn zur Datenaufnahme die Objektaufnahmeeinrichtung jeweils um eine erste und eine zweite Achse gedreht wird, läßt sich die Transformation gemäß der Vorschrift

$$\begin{pmatrix} x \\ y \end{pmatrix} = r_1 \begin{pmatrix} \sin\alpha \\ \cos\alpha - 1 \end{pmatrix} + r_2 \begin{pmatrix} \cos\alpha & \sin\alpha \\ -\sin\alpha & \cos\alpha \end{pmatrix} \begin{pmatrix} \cos\beta - 1 \\ \sin\beta \end{pmatrix}$$

durchführen. Hierbei sind $\alpha$ und $\beta$ die Winkelstellungen der jeweiligen Drehachsen; $r_1$, $r_2$ sind die Radien der jeweiligen Drehachsen; x, y sind die Koordinaten eines Bildpunktes nach der Transformation.

Im Hinblick auf eine konkrete Ausführungsform wird die Transformation zumindest teilweise mit Hilfe einer Eingangs-Lookup-Tabelle der Digitalisierungseinrichtung durchgeführt. In der Eingangs-Lookup-Tabelle könnten beispielsweise die Funktionswerte der Funktionen $\sin\alpha$ und $\sin\beta$ abgespeichert sein.

Weiterhin könnte die entsprechende Matrixmultiplikaton der Transformationsvorschrift in einem der Eingangs-Lookup-Tabelle nachgeordneten FPGA-Modul (Field-Programmable-Gate-Array) durchgeführt werden, in dem auch die Konstanten $r_1$ und $r_2$ abgespeichert sind. Hierdurch ist insbesondere mit der Datenaufnahme eine gleichzeitige Transformation möglich, was wiederum einen hohen Datendurchsatz ermöglicht.

Wenn zur mikroskopischen Aufnahme die Verwendung von Immersionsöl vorgesehen ist, wird dieses in vorteilhafter Weise vor dem automatischen Bestückungsvorgang - vorzugsweise automatisiert - auf den Objektträger pipettiert. Bei dem Immersionsöl könnte es sich beispielsweise um Wasser, Glyzerin oder herkömmliches Immersionsöl handeln, in Abhängigkeit von dessen Viskosität ist jedoch dann die maximale Scangeschwindigkeit der Objektaufnahmeeinrichtung nach oben begrenzt.

In einer konkreten Ausführungsform weist das Laserscan-Mikroskop einen ortsfesten Beleuchtungs- und Detektionsstrahl auf. Hierdurch ist eine aufwendige Feldkorrektur eines verwendeten Mikroskopobjektivs nicht erforderlich und es kann eine relativ einfache und preiswerte Optik verwendet werden. Insbesondere hinsichtlich der Justierung der optischen Komponenten ist diese Vorgehensweise vorteilhaft, da das Laserscan-Mikroskop lediglich bei der Produktion zu justieren ist und danach keine weitere Justierung benötigt.

Für die Zuweisung der gescannten Bilddaten zu den Koordinaten der jeweiligen Scanposition weist die Dreheinrichtung einen Positionsgeber auf, dessen Ausgang mit der Steuerungseinheit des Laserscan-Mikroskops verbunden ist. Dieser Positionsgeber liefert die für die Transformationsvorschrift notwendigen momentanen Winkelstellungen der Drehachsen, so dass ein detektierter Bildpunkt mit hoher Genauigkeit seiner tatsächlichen Ortskoordinate zugewiesen werden kann. Wenn für das Scannen der Objektaufnahmeeinrichtung eine Translationsbewegung vorgesehen ist, weist in analoger Weise die Einrichtung zur Durchführung der Translationsbewegung einen Positionsgeber auf, dessen Ausgang ebenfalls mit der Steuereinheit des Laserscan-Mikroskops verbunden ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung der Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der Lehre erläutert. In den Zeichnungen zeigt

Fig. 1   in einer schematischen Darstellung ein erstes Ausführungsbeispiel einer erfindungsgemäßen Anordnung zum Scannen einer Objektaufnahmeeinrichtung,

Fig. 2   in einer schematischen Darstellung eine Seitenansicht der erfindungsgemäßen Anordnung zum Scannen einer Objektaufnahmeeinrichtung aus Fig. 1,

Fig. 3   in einer schematischen Darstellung ein alternatives Ausführungsbeispiel einer Anordnung zum Scannen einer Objektaufnahmeeinrichtung,

Fig. 4   die relative Lage zweier Drehachsen einer Anordnung zum Scannen einer Objektaufnahmeeinrichtung,

Fig. 5   in einer schematischen Darstellung die Scan-Trajektorien bzw. das resultierende Koordinatensystem einer erfindungsgemäßen Anordnung zum Scannen einer Objektaufnahmeeinrichtung,

Fig. 6   in einer schematischen Darstellung die Scan-Trajektorien bzw. das resultierende Koordinatensystem einer alternativen Anordnung zum Scannen einer Objektaufnahmeeinrichtung.

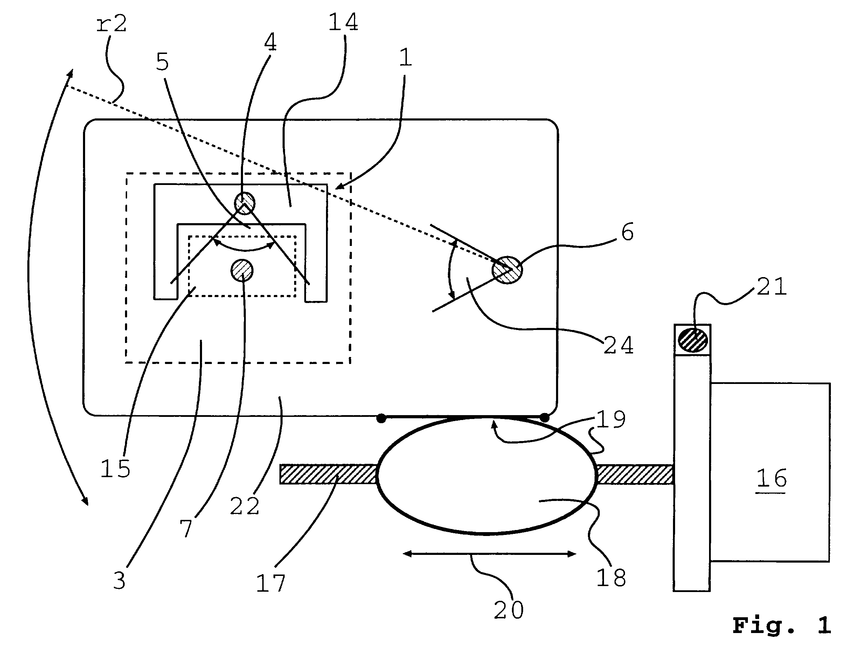

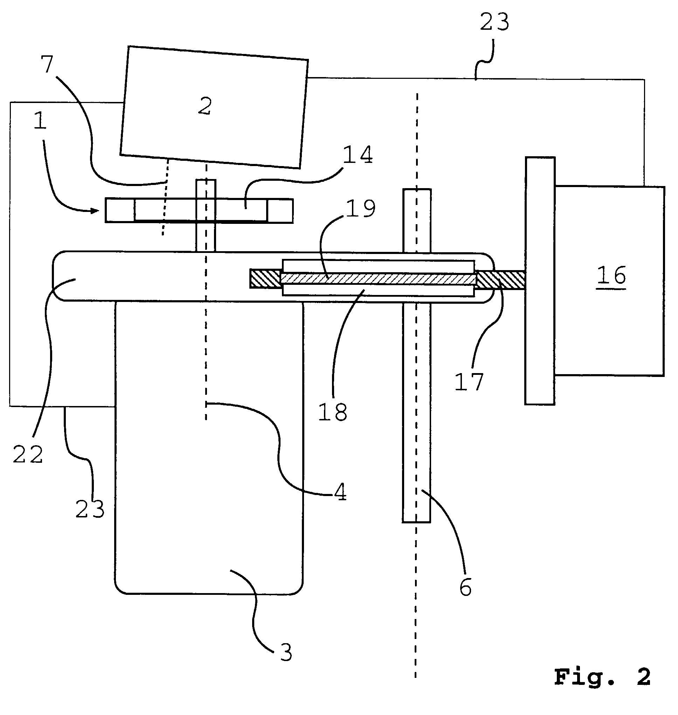

In den Fig. 1 und 2 ist ein erstes Ausführungsbeispiel einer Anordnung zum Scannen einer Objektaufnahmeeinrichtung 1 gezeigt. Das zur Datenaufnahme verwendete Laserscan-Mikroskop 2 ist in Fig. 2 schematisch dargestellt.

Die Objektaufnahmeeinrichtung 1 ist von einer Dreheinrichtung 3 um eine erste Achse 4 in einem Winkelbereich 5 alternierend im Uhrzeigersinn und entgegengesetzt dem Uhrzeigersinn drehbar.

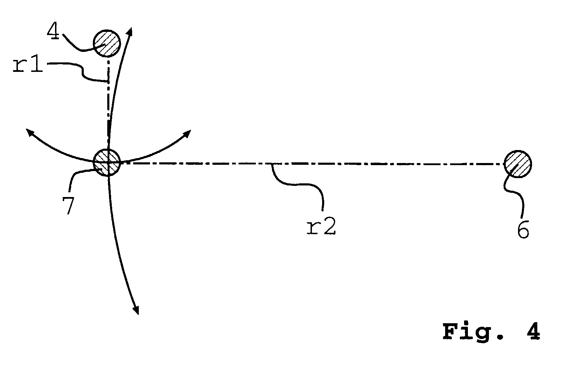

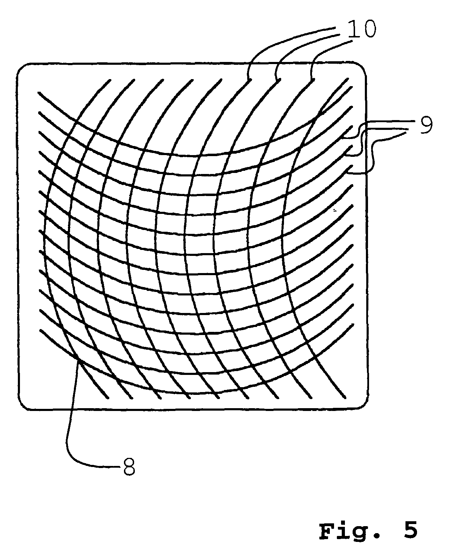

Die Objektaufnahmeeinrichtung 1 ist zusammen mit der Dreheinrichtung 3 um eine zweite Achse 6 drehbar. Die erste Drehachse 4 ist zur zweiten Drehachse 6 parallel angeordnet. Der Fig. 4 kann entnommen werden, dass die beiden Drehachsen 4, 6 relativ zur optischen Achse 7 des Laserscan-Mikroskops derart angeordnet sind, dass die resultierenden Scan-Trajektorien 8 beider Achsen in ihren Schnittpunkten nahezu orthogonal zueinander verlaufen. In Fig. 5 sind Scan-Trajektorien 8 bzw. das resultierende Koordinatensystem dargestellt. Die Scan-Trajektorien 9 resultieren aus der alternierenden Drehung um die erste Achse 4, die Scan-Trajektorien 10 resultieren aus der alternierenden Drehung um die zweite Achse 6. Der Fig. 5 ist des Weiteren zu entnehmen, dass die Trajektorien 10 in ihrem Schnittpunkt nahezu senkrecht zu den Trajektorien 9 sind. In Fig. 5 ist der Radius $r_1$ der ersten Achse 4 - also der Abstand von der ersten Achse 4 zur optischen Achse 7 des Laserscan-Mikroskops 2 - gleich dem Radius $r_2$ der zweiten Achse 6 gewählt.

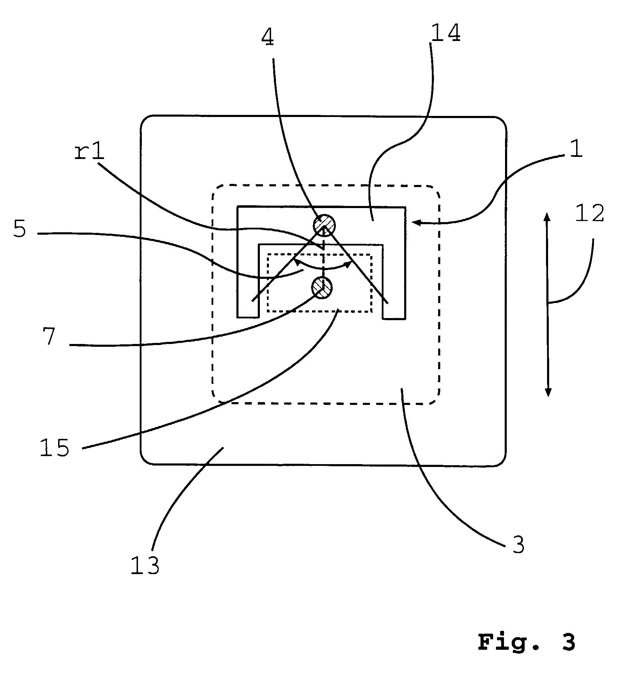

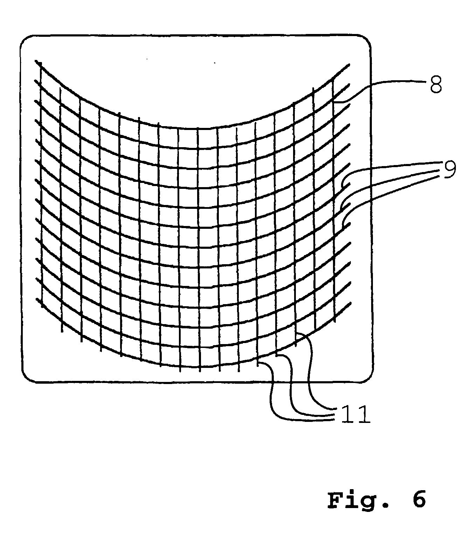

In einer alternativen Ausführungsform gemäß Fig. 3 wird die Objektaufnahmeeinrichtung 1 samt der ihr zugeordneten Dreheinrichtung 3 translatorisch bewegt. Die so erzeugte Scanbewegung ergibt die in Fig. 6 dargestellten Scan-Trajektorien 8, bei denen die Scan-Trajektorien 9 von der alternierenden Drehung der Objektaufnaheeinrichtung um die erste Achse 4 und die Scan-Trajektorien 11 aus der translatorischen Bewegung entlang der Richtung 12 resultieren.

In den Ausführungsformen gemäß Fig. 1 bis 3 liegt die resultierende Scanbewegung der Objektaufnahmeeinrichtung in einer Ebene, die parallel zur Oberfläche der Objektaufnahmeeinrichtung verläuft. Somit verläuft die Translationsbewegung in der Ausführungsform gemäß Fig. 3 ebenfalls parallel zur Oberfläche der Objektaufnahmeeinrichtung. Diese Bewegung verläuft periodisch in entgegengesetzte Richtungen 12 und wird mit einem lediglich schematisch dargestellten Linearverschiebetisch 13 realisiert. Hierbei nimmt der bewegliche Teil des Linearverschiebetischs 13 die Dreheinrichtung 3 auf, die wiederum die Objektaufnahmeeinrichtung 1 aufnimmt.

In der Fig. 2 ist angedeutet, dass die Objektaufnahmeeinrichtung 1 zur optischen Achse 7 des Laserscan-Mikroskops 2 derart angeordnet ist, dass die Normale der Oberfläche der Objektaufnahmeeinrichtung 1 einen Winkel zur optischen Achse 7 des Laserscan-Mikroskops 2 aufweist, der 5 Grad beträgt und in dieser Figur nicht maßstäblich eingezeichnet ist. Somit trifft der Anregungsstrahl des Laserscan-Mikroskops in einem Einfallswinkel von 5 Grad auf die Oberfläche der Objektaufnahmeeinrichtung 1 auf, ca. 5 % der Intensität des Anregungslichts werden hierbei an der Oberfläche der Objektaufnahmeeinrichtung 1 unter einem Ausfallswinkel von 5 Grad reflektiert. Somit wird dieser Haupt-Rückreflex in vorteilhafter Weise aus dem Detektionsstrahlengang herausreflektiert, so dass das hier zu detektierende Fluoreszenzlicht, das von seiner Intensität ca. 3 Größenordnungen geringer als das Anregungslicht ist, verglichen zu herkömmlich verwendeten Beleuchtungsmethoden effizienter detektiert werden kann.

Lediglich schematisch ist in den Fig. 1 und 2 angedeutet, dass die Objektaufnahmeeinrichtung 1 eine Objektträgereinheit 14 aufweist, die automatisch mit Objektträgern 15 bestückbar ist. Die Objektträgereinheit 14 besteht aus Aluminium und ist derart konstruiert, dass der Schwerpunkt der Objektaufnahmeeinrichtung 1 auf der ersten Drehachse 4 liegt. Ein Objektträger 15 wird mit Hilfe einer nicht eingezeichneten Unterdruckeinrichtung an der Objektträgereinheit 14 befestigt, so dass keine zusätzlichen Haltevorrichtungen an der Objektträgereinheit 14 angeordnet sind.

Als Dreheinrichtung 3 wird ein Galvanometer verwendet, das bei einer Frequenz von 100 Hz betrieben wird. Für die in der Fig. 1 und 2 dargestellte Ausführungsform wird als Dreheinrichtung der zweiten Achse 6 eine Hebeleinrichtung verwendet. Die Hebeleinrichtung weist einen Elektromotor 16, eine Gewindespindel 17, ein Umlaufgewindestück 18 und ein Verbindungselement 19 auf. Die Achse des Elektromotors 16 ist als Gewindespindel 17 ausgeführt und durch Drehen der Gewindespindel 17 wird das Umlaufgewindestück 18 in Richtung 20 positioniert. Der Elektromotor 16 ist um eine Achse 21 schwenkbar federnd gelagert, so dass eine leichte Unwucht der Gewindespindel 17 nicht auf die Dreheinrichtung 3 in Form von unerwünschten zusätzlichen Bewegungsanteilen übertragen wird. Das Umlaufgewindestück 18 ist mit der Dreheinrichtung 3 über ein Verbindungselement 19 verbunden. Das Verbindungselement 19 ist als eine Blattfeder ausgeführt, die das Umlaufgewindestück 18 umgibt und die an deren beiden Enden am Drehteil 22 befestigt ist. Die Blattfeder weist schlitzförmige Aussparungen auf, durch die die Gewingespindel 17 durchtreten kann. Im Bereich zwischen dem Verbindungselement 19 und dem Drehteil 22 weist der Teil der Blattfeder vom einen Befestigungsende ebenfalls eine schlitzförmige Aussparungen auf, durch die der schmal ausgestaltete Teil der Blattfeder des anderen Befestigungsendes durchtreten kann. Hierdurch ist eine nahezu spielfreie Übertragung der Linearbewegung des Umlaufgewindestücks 18 auf die Dreheinrichtung 3 möglich.

Die Datenaufnahme erfolgt bezüglich der ersten Achse 4 bidirektional, die gemessenen, im krummlinigen Koordinatensystem vorliegenden Bilddaten werden gemäß einer entsprechenden Transformationsvorschrift in ein rechtwinkliges Koordinatensystem überführt. Die Transformationsvorschrift ergibt sich aus der Anordnung der Drehachsen 4, 6 bzw. der Drehachse 4 und der Translationsbewegung. Für die Ausführungsform gemäß Fig. 1 und 2, deren Scan-Geometrie der Fig. 4 entnommen werden kann, wird die Transformation vom krummlinigen Koordinatensystem in das rechtwinklige Koordinatensystem gemäß der Vorschrift

$$\begin{pmatrix} x \\ y \end{pmatrix} = r_1 \begin{pmatrix} \sin\alpha \\ \cos\alpha - 1 \end{pmatrix} + r_2 \begin{pmatrix} \cos\alpha & \sin\alpha \\ -\sin\alpha & \cos\alpha \end{pmatrix} \begin{pmatrix} \cos\beta - 1 \\ \sin\beta \end{pmatrix}$$

durchgeführt. $\alpha$ und $\beta$ sind hierbei die momentanen Winkelstellungen der Objektaufnahmeeinrichtung, wobei $\alpha$ die alternierende Drehbewegung der ersten Achse 4, $\beta$ die alternierende Drehung der zweiten Achse 6 parametrisiert. $r_1$ und $r_2$ sind die Radien der jeweiligen Drehachsen; x, y sind die Koordinaten des Bildpunktes im rechtwinkligen Koordinatensystem nach der Transformation.

Diese Transformation wird in vorteilhafter Weise zeitgleich während der Datenaufnahme mit Hilfe einer Eingangs-Lookup-Tabelle durchgeführt. Hierbei sind die Funktionswerte der Funktionen sin $\alpha$, sin $\beta$, cos $\alpha$, cos($\alpha$ - 1) und cos($\beta$ - 1) für alle Winkelstellungen $\alpha$, $\beta$, die die Objektaufnahmeeinrichtung während des Scanvorgangs einnehmen kann, in der Eingangs-Lookup-Tabelle abgespeichert. Die Verknüpfung der Matrixmultiplikation aus der Transformationsvorschrift wird in einem der Eingangs-Lookup-Tabelle nachgeordneten FPGA-Modul (Field-Programmable-Gate-Array) durchgeführt, in dem auch die Konstanten $r_1$ und $r_2$ abgespeichert sind.

Bei den Ausführungsformen gemäß Fig. 1 und Fig. 3 weist das Laserscan-Mikroskop einen ortsfesten Beleuchtungs- und Dektektionsstrahl auf. Hierdurch kann die verwendete Mikroskopoptik, insbesondere das Mikroskopobjektiv, speziell für eine bestimmte Applikation ausgewählt werden, was die Kosten des Gesamtsystems reduziert.

In den Ausführungsformen der Fig. 1 und 2 weist die Dreheinrichtung 3 und der Elektromotor 16 jeweils einen Positionsgeber auf, dessen Ausgang mit der Steuerungseinheit des Laserscan-Mikroskops 2 über die Leitung 23 verbunden ist. Diese Positionsgeber melden der Steuerungseinheit des Laserscan-Mikroskops 2 die momentane, tatsächlich vorliegende Winkelstellung der Objektaufnahmeeinrichtung - also die Winkel $\alpha$ und $\beta$ -, so dass mit Hilfe der Eingangs-Lookup-Tabelle eine Digitalisierung der gemessenen Bilddaten zusammen mit der gleichzeitigen Transformation in ein rechtwinkliges Koordinatensystem durchgeführt werden kann. In analoger Weise wird in der Ausführungsform gemäß Fig. 3 verfahren, hier sind die Positionsgeber der Dreheinrichtung 3 und des Linearverschiebetischs 13 mit der Steuerungseinheit des Laserscan-Mikroskops 2 verbunden.

Abschließend sei ganz besonders darauf hingewiesen, dass die voranstehend erörterten Ausführungsbeispiele lediglich zur Beschreibung der beanspruchten Lehre dienen, diese jedoch nicht auf die rein willkürlich gewählten Ausführungsbeispiele einschränken.

**Patentansprüche**

1.   Anordnung zum Scannen einer Objektaufnahmeeinrichtung (1) zur Datenaufnahme mit einem Laserscan-Mikroskop, vorzugsweise mit einem konfokalen Laserscan-Mikroskop (2),
     **dadurch gekennzeichnet,** dass die Objektaufnahmeeinrichtung (1) von einer Dreheinrichtung (3) um eine erste Achse (4) alternierend drehbar ist.

2.   Anordnung nach Anspruch 1, dadurch gekennzeichnet, dass die Objektaufnahmeeinrichtung (1) zusammen mit der Dreheinrichtung (3) um eine zweite Achse (6) drehbar ist, wobei die erste Drehachse (4) zur zweiten Drehachse (6) zumindest nahezu parallel angeordnet sein kann und wobei die beiden Drehachsen (4, 6) relativ zur optischen Achse (7) des Laserscan-Mikroskops (2) derart angeordnet sein kann, dass die resultierenden Scan-Trajektorien (8) beider Achsen (4, 6) nahezu orthogonal zueinander verlaufen.

3.   Anordnung nach Anspruch 1 oder 2, dadurch gekennzeichnet, dass die Objektaufnahmeeinrichtung (1) gemeinsam mit der Dreheinrichtung (3) translatorisch bewegbar ist, wobei die Translationsbewegung zumindest nahezu parallel zu der Oberfläche der Objektaufnahmeeinrichtung (1) oder entlang der optischen Achse (7) oder entlang der linearen Richtung (12) und/oder periodisch in entgegengesetzte Richtungen (12) verlaufen kann und/oder durch einen Linearverschiebetisch (13) mit entsprechenden Führungsmitteln realisierbar ist.

4.   Anordnung nach einem der Ansprüche 1 bis 3, dadurch gekennzeichnet, dass die resultierende Scanbewegung der Objektaufnahmeeinrichtung (1) in einer vorzugsweise zumindest nahezu parallel zu der Oberfläche der Objektaufnahmeeinrichtung (1) verlaufenden Ebene liegt.

5.   Anordnung nach einem der Ansprüche 1 bis 4, dadurch gekennzeichnet, dass die Objektaufnahmeeinrichtung (1) zur optischen Achse (7) des Laserscan-Mikroskops (2) derart angeordnet ist, dass die Normale der Oberfläche der Objektaufnahmeeinrichtung (1) einen Winkel zur optischen Achse (7) des Laserscan-Mikroskops (2) aufweist, der von 0 Grad verschieden ist, wobei der Winkel zwischen der Normale der Oberfläche der Objektaufnahmeeinrichtung (1) und der optischen Achse (7) des Laserscan-Mikroskops (2) durch eine verkippte Anordnung mindestens einer Drehachse (4) relativ zur optischen Achse erzielt werden kann und vorzugsweise größer als 0 und kleiner als 10 Grad ist.

6. Anordnung nach einem der Ansprüche 1 bis 5, dadurch gekennzeichnet, dass die Objektaufnahmeeinrichtung (1) einen Objektträger (15) und eine Objektträgereinheit (14) aufweist, wobei die Objektaufnahmeeinrichtung (1) vorzugsweise automatisch mit Objektträger (15) bestückbar ist und aus Material geringer Dichte/Masse, vorzugsweise aus Plastik oder Aluminium und der Objektträger (15) zumindest teilweise aus Material geringer Dichte/Masse, vorzugsweise aus Plastik, bestehen kann.

7. Anordnung nach Anspruch 6, dadurch gekennzeichnet, dass der Objektträger (15) mit mindestens einer Klemmvorrichtung an der Objektträgereinheit (14) oder mit Hilfe einer Unterdruck- bzw. Vakuumeinrichtung an der Objektträgereinheit (14) oder aufgrund magnetischer oder elektromagnetischer Wechselwirkung an der Objektträgereinheit (14) befestigbar ist.

8. Anordnung nach einem der Ansprüche 1 bis 7, dadurch gekennzeichnet, dass als Dreheinrichtung (3) ein Galvanometer verwendet wird, wobei das Galvanometer mit einer Frequenz betrieben wird, die in einem Bereich von 10 bis 1000 Hz liegen kann und als Dreheinrichtung (3) vorzugsweise ein resonantes Galvanometer verwendbar ist.

9. Anordnung nach einem der Ansprüche 1 bis 8, dadurch gekennzeichnet, dass als Dreheinrichtung (3) für die zweite Achse (6) ein Galvanometer vorgesehen ist.

10. Anordnung nach einem der Ansprüche 1 bis 9, dadurch gekennzeichnet, dass als Dreheinrichtung für die zweite Achse (6) eine Hebeleinrichtung vorgesehen ist, wobei die Hebeleinrichtung einen Elektromotor (16), eine Gewindespindel (17), ein Umlaufgewindestück (18) und ein Verbindungselement (19) umfassen kann und wobei die Gewindespindel (17) vorzugsweise der Achse des Elektromotors (16) zugeordnet ist, wobei das Umlaufgewindestück (18) durch Drehen der Gewindespindel (17) in der Richtung der Achse der Gewindespindel (17) positionierbar sein kann und wobei das Verbindungselement (19) vorzugsweise das Umlaufgewindestück (18) und die Dreheinrichtung (3) verbindet und als Blattfeder ausgeführt sein kann, wobei der Elektromotor (16) um eine Achse (21) schwenkbar federnd gelagert sein kann.

11. Anordnung nach einem der Ansprüche 1 bis 10, dadurch gekennzeichnet, dass die Datenaufnahme bezüglich der schnellen Drehachse unidirektional oder bidirektional erfolgt.

12. Anordnung nach einem der Ansprüche 1 bis 11, dadurch gekennzeichnet, dass die gemessenen, im krummlinigen Koordinatensystem vorliegenden Bilddaten in ein rechtwinkliges Koordinatensystem transformiert werden, wobei die Transformation gemäß der Vorschrift

$$\begin{pmatrix} x \\ y \end{pmatrix} = r_1 \begin{pmatrix} \sin\alpha \\ \cos\alpha - 1 \end{pmatrix} + r_2 \begin{pmatrix} \cos\alpha & \sin\alpha \\ -\sin\alpha & \cos\alpha \end{pmatrix} \begin{pmatrix} \cos\beta - 1 \\ \sin\beta \end{pmatrix}$$

durchgeführt werden kann, wobei $\alpha$, $\beta$ die Winkelstellung der jeweiligen Drehachsen, $r_1$, $r_2$, die Radien der jeweiligen Drehachsen und $x$, $y$ die Koordinaten eines Bildpunktes nach der Transformation sind und wobei die Transformation zumindest teilweise mit Hilfe einer Eingangs-Lookup-Tabelle durchgeführt werden kann.

13. Anordnung nach einem der Ansprüche 1 bis 12, dadurch gekennzeichnet, dass bei Verwendung von Immersionsöl dieses vor dem automatischen Bestückungsvorgang vorzugsweise automatisch auf den Objektträger pipettiert wird.

14. Anordnung nach einem der Ansprüche 1 bis 13, dadurch gekennzeichnet, dass das Laserscan-Mikroskop (2) einen ortsfesten Beleuchtungs- und Detektionsstrahl aufweist.

15. Anordnung nach einem der Ansprüche 1 bis 14, dadurch gekennzeichnet, dass die Dreheinrichtung (3) einen Positionsgeber aufweist, dessen Ausgang mit der Steuerungseinheit des Laserscan-Mikroskops (2) verbunden ist und/oder dass die Einrichtung zur Durchführung der Translationsbewegung einen Positionsgeber aufweist, dessen Ausgang mit der Steuerungseinheit des Laserscan-Mikroskops (2) verbunden ist.

Fig. 1

Fig. 2

Fig. 3

Fig. 4

Fig. 5

Fig. 6